# EUROPÄISCHE PATENTANMELDUNG

(11) **EP 3 722 046 A2**
(43) Veröffentlichungstag der Anmeldung: **14.10.2020**
(21) Anmeldenummer: 20164144.6
(22) Anmeldetag: 19.03.2020
(51) Int. Cl.: B23Q 39/04, B23B 3/30

(54) **WERKZEUGMASCHINE UND SCHLEPPRAHMENBAND FÜR DIE ZUFUHR/ABFUHR VON WERKSTÜCKEN**

(30) Priorität: 20.03.2019 DE 102019203790
(71) Anmelder: EMCO Magdeburg GmbH, 39124 Magdeburg (DE)
(72) Erfinder: Wilhelm, Christian, 06406 Bernburg (DE)
(74) Vertreter: Hoffmann Eitle

(57) **Zusammenfassung**

Die Erfindung stellt eine Werkzeugmaschine 1 zur Bearbeitung von Werkstücken bereit, die ein Maschinengestell 10, eine erste am Maschinengestell 10 angeordnete Werkstückspindel 20 mit einer um eine erste Spindelachse 21 drehbaren ersten Werkstückaufnahme 22, eine zweite am Maschinengestell 10 angeordnete Werkstückspindel 30 mit einer um eine zweite Spindelachse 31 drehbaren zweiten Werkstückaufnahme 32, einen ersten Werkzeugträger 40 zur Bearbeitung eines in der ersten Werkstückspindel 20 gehaltenen Werkstücks W auf einer Seite V, und einen zweiten Werkzeugträger 50 zur Bearbeitung eines in der zweiten Werkstückspindel 30 gehaltenen Werkstücks W auf einer anderen Seite R aufweist. Die zweite Werkstückspindel ist auf einem Spindelträger 60 angeordnet, welcher über ein erstes Schlittensystem 70 gegenüber dem Maschinengestell 10 parallel und quer zur ersten Spindelachse 31 bewegbar ist, die zweite Werkstückspindel 30 ist auf dem Spindelträger 60 mittels einer Schwenkeinrichtung 80 um eine Schwenkachse 81, welche senkrecht zu einer Bewegungsebene E verläuft, schwenkbar, und der zweite Werkzeugträger 50 sitzt auf einem Führungsschlitten 55, der gegenüber dem Maschinengestell 10 parallel zu der Schwenkachse 81 bewegbar ist. Überdies stellt die Erfindung ein Schlepprahmenband mit einem Hubtisch bereit, mit dem Werkstücke zu einer Werkzeugmaschine zugeführt oder von dieser abtransportiert werden können.

## Beschreibung

### Technisches Gebiet

Die vorliegende Erfindung betrifft eine Werkzeugmaschine, insbesondere eine Drehmaschine, zur Bearbeitung von Werkstücken, insbesondere zur Bearbeitung von Stangenmaterial. Ferner betrifft die vorliegende Erfindung ein Schlepprahmenband für die Zufuhr von zu bearbeitenden Werkstücken zu einer Werkzeugmaschine oder für die Abfuhr von durch die Werkzeugmaschine bearbeitete Werkstücke.

### Stand der Technik

Bekannt sind Drehmaschinen zur Bearbeitung von Werkstücken, bei denen in einer Werkzeugmaschine beide Enden des Werkstücks bearbeitet werden können, d.h. eine Zweiseitenbearbeitung des Werkstücks durchgeführt werden kann.

Bei der in DE 195 21 846 A1 beschriebenen Drehmaschine dieser Art ist in jedem von zwei Spindelstöcken jeweils eine Werkstückspindel rotierend antreibbar gelagert. Jeder Spindelstock trägt auf der der Werkstückspindel gegenüberliegenden Seite eine Werkzeugaufnahme. Die darin aufgenommenen Werkzeuge dienen zur Bearbeitung des jeweils an der Werkstückspindel des anderen Spindelstocks gespannten Werkstücks. Diese Drehmaschine ermöglicht sowohl eine vollständig automatischen Werkstücktransport ohne das Vorsehen zusätzlicher Werkstück-Handhabungseinrichtungen als auch eine Zweiseitenbearbeitung der Werkstücke. Das Werkstück wird hierzu in vertikaler Ausrichtung der ersten Werkstückspindel durch deren Werkstückspannmittel von einer horizontalen Auflage aufgenommen, nach dem Schwenken dieser ersten Werkstückspindel in die Horizontale durch die Werkzeuge bearbeitet, die in der Werkzeugaufnahme des zweiten Spindelstocks sitzen und danach dem Spannfutter der zweiten Werkstückspindel übergeben. In der zweiten Werkstückspindel wird die dann zweite Seite des Werkstücks durch die am ersten Spindelstock vorgesehenen Werkzeuge bearbeitet und nach dem Schwenken der zweiten Werkstückspindel in die vertikale Lage auf einer Werkstückauflagefläche abgelegt.

Da jeder Spindelstock sowohl eine Werkstückspindel als auch Werkzeuge trägt, und während der Bearbeitung jeweils beide Spindelstöcke am Bearbeitungsvorgang beteiligt sind, kann während der Bearbeitungszeit immer nur ein Werkstück bearbeitet werden, und während dieser Zeit kann auch kein anderes Werkstück gehandhabt werden. Die Zeit von der Aufnahme eines Ausgangswerkstücks bis zur Ablage eines vollständig bearbeiteten Werkstücks ist deshalb vergleichsweise lang und der Durchsatz derartiger Drehmaschinen eher niedrig.

Aus den genannten Gründen besteht daher schon länger das Bestreben Drehmaschinen bereitzustellen, bei denen Bearbeitungsvorgänge und Handhabungsvorgänge einander zeitlich überlappen können.

Hierzu lehrt beispielsweise die DE 199 04 859 A1 eine Drehmaschine mit zwei an einem Maschinenbett in einer Richtung einer ersten, horizontalen Achse und in Richtung einer zweiten, vertikalen Achse verfahrbar gelagerten, mit Werkstückspannmitteln versehenen Werkstückspindeln, die jeweils um eine dritte Achse, die zu der durch die erste und die zweite Achse aufgespannten Ebene senkrecht ist, schwenkbar sind. Hierbei sind die Werkstückspindeln so ausgebildet, dass ihre Drehachsen während der Übergabe eines Werkstücks von der einen Werkstückspindel zur anderen fluchten. Ferner sind unterhalb der mit den Werkstückspindeln vertikal nach unten schwenkbaren Werkstückspannmittel horizontale Auflagen für Werkstücke vorgesehen, wobei die Werkstückspindeln zur Bearbeitung der in den Werkstückspannmitteln gehaltenen Werkstücke bei vertikaler Rotationsachse in hängender Anordnung ausgebildet sind und eine Werkzeugaufnahme unterhalb der hängenden Werkstückspannmittel am Maschinenbett angeordnet ist.

Ferner beschreibt die DE 10 2004 004 019 B4 eine Drehmaschine umfassend eine erste an einem Maschinengestell angeordnete Werkstückspindel mit einer um eine erste Spindelachse drehbaren ersten Werkstückaufnahme und eine zweite am Maschinengestell angeordnete Werkstückspindel mit einer um eine zweite Spindelachse drehbaren zweiten Werkstückaufnahme. In der dargestellten Drehmaschine ist die zweite Werkstückspindel um eine quer zu der zweiten Spindelachse verlaufende Schwenkachse verschwenkbar, und zwar von einer Stellung, in welcher die zweite Spindelachse parallel oder koaxial zur ersten Spindelachse verläuft, in eine Stellung, in welcher die zweite Spindelachse quer zur ersten Spindelachse ausgerichtet ist.

Ferner beschrieben ist ein erster mit mindestens einem Werkzeug bestückter Werkzeugträger zur Bearbeitung eines in der ersten Werkstückspindel gehaltenen Werkstücks auf einer Seite, ein zweiter mit mindestens einem Werkzeug bestückter Werkzeugträger zur Bearbeitung eines in der zweiten Werkstückspindel gehaltenen Werkstücks auf einer anderen Seite. Die erste und die zweite Werkstückspindel mit einander zugewandten Werkstückaufnahmen sind zur direkten Übergabe des auf der einen Seite bearbeiteten Werkstücks von einer der Werkstückaufnahmen in die jeweils andere Werkstückaufnahme in eine Übergabestellung der Werkstückspindeln bewegbar. Hierbei sind die Spindelachsen koaxial zueinander ausgerichtet und in Richtung der Achsen bewegbar, wobei der ersten Werkstückspindel zum Laden des rohen Werkstücks eine Stangenzuführeinrichtung zugeordnet ist. Das fertig bearbeitete Werkstück kann von der zweiten Werkstückspindel mit quer zur ersten Spindelachse verlaufender zweiter Spindelachse einer Werkstückabfuhreinrichtung übergeben werden.

Die geschilderte Drehmaschine ist jedoch mit dem Problem behaftet, dass bei der Abgabe des Werkstücks durch die zweite Werkstückspindel an die nachgeschaltete Werkstückabfuhreinrichtung das Werkstück lediglich ungenau auf der Werkstückabfuhreinrichtung, insbesondere einem Trägerelement der Werkstückabfuhreinrichtung, positioniert werden kann, wodurch die in der Drehmaschine vorhandenen Lage- und Ausrichtungsinformationen über das Werkstück bei der Übergabe an die Werkstückabfuhreinrichtung verloren gehen.

### Gegenstand der Erfindung

Der Erfindung liegt die Aufgabe zu Grunde, eine Werkzeugmaschine bereitzustellen, die in der Lage ist, einerseits Bearbeitungsvorgänge und Handhabungsvorgänge einander zeitlich zu überlappen, um die Zeit von der Aufnahme eines Ausgangswerkstücks bis zur Ablage eines vollständig bearbeiteten Werkstücks zu minimieren, andererseits die in der Werkzeugmaschine gewonnenen Lage- und Ausrichtungsinformationen über das bearbeitete Werkstück für nachgeschaltete Bearbeitungsschritte verfügbar zu machen und gleichzeitig eine kompakte und in sich steife Bauweise zu realisieren, um unnötige Schwingungen die das Bearbeitungsergebnis beeinträchtigen könnten zu vermeiden.

Diese Aufgabe wird gelöst durch eine Werkzeugmaschine, insbesondre Drehmaschine, nach Anspruch 1 oder 2. Überdies stellt die Erfindung ein Schlepprahmenband mit einem Hubtisch für die Zufuhr/Abfuhr von Werkstücken an/von einer Werkzeugmaschine bereit, das dazu eingerichtet ist, die von der Werkzeugmaschine gewonnen Lage- und Ausrichtungsinformationen an nachgeschaltete Bearbeitungsschritte zu übertragen.

Hierbei ist einer der Kerngedanken der vorliegenden Erfindung, eine Werkzeugmaschine bereitzustellen, welche zwei Werkstückspindeln aufweist, von denen die im Bearbeitungsfluss der Werkzeugmaschine später angeordnete Werkstückspindel zumindest in eine vertikale Ausrichtung bringbar ist, d.h. die Werkstückspindel zumindest eine Stellung aufweist, in der eine Spindelachse selbiger senkrecht zu einer Grundfläche, auf der ein Maschinengestell der Werkzeugmaschine steht, senkrecht ist, und diese Werkstückspindel anhand eines Schlittensystems in dieser vertikalen Richtung bewegbar ist.

Dadurch, dass die Werkstückspindel, welche die Endbearbeitung des Werkstücks innerhalb der Werkzeugmaschine durchführt eine Stellung annehmen kann, in welcher die Werkstückspindel vertikal ausgerichtet ist, und zudem in der vertikalen Richtung verlagerbar ist, ist es möglich, das fertigbearbeitete Werkstück beispielsweise an eine nachgeschaltete Transporteinrichtung zu übergeben, ohne die in der Werkzeugmaschine gewonnenen Lage und Ausrichtungsinformationen über das Werkzeug zu verlieren.

Ferner ist es auch denkbar, anhand dieser Werkstückspindel ein bereits bearbeitetes Werkstück, welches mit Lage- und Ausrichtungsinformationen der Werkzeugmaschine zugeführt wird, aufzunehmen, ohne diese Lage- und Ausrichtungsinformationen zu verlieren.

Gemäß einer Ausführungsform der vorliegenden Erfindung weist eine Werkzeugmaschine, insbesondere Drehmaschine, zur Bearbeitung von Werkstücken, insbesondere zur Bearbeitung von Stangenmaterial, auf: ein Maschinengestell, eine erste am Maschinengestell angeordnete Werkstückspindel mit einer um eine erste Spindelachse drehbaren ersten Werkstückaufnahme, eine zweite am Maschinengestell angeordnete Werkstückspindel mit einer um eine zweite Spindelachse drehbaren zweiten Werkstückaufnahme, einen ersten mit mindestens einem Werkzeug bestückten Werkzeugträger zur Bearbeitung eines in der ersten Werkstückspindel gehaltenen Werkstücks auf einer Seite, und einen zweiten mit mindestens einem Werkzeug bestückten Werkzeugträger zur Bearbeitung eines in der zweiten Werkstückspindel gehaltenen Werkstücks auf einer anderen Seite, wobei die zweite Werkstückspindel auf einem Spindelträger angeordnet ist, welcher über ein erstes Schlittensystem gegenüber dem Maschinengestell parallel zur ersten Spindelachse in einer sogenannten X-Richtung und quer, insbesondere senkrecht, zur ersten Spindelachse in einer sogenannten Z₂-Richtung bewegbar ist, die zweite Werkstückspindel auf dem Spindelträger mittels einer Schwenkeinrichtung um eine Schwenkachse, welche senkrecht zu einer Bewegungsebene verläuft, die durch die X-Richtung und die Z₂-Richtung definiert ist, schwenkbar ist, und der zweite Werkzeugträger auf einem Führungsschlitten sitzt, der gegenüber dem Maschinengestell parallel zu der Schwenkachse, die in einer sogenannten Y-Richtung verläuft, bewegbar ist.

Gemäß einer alternativen Ausführungsform der vorliegenden Erfindung weist eine Werkzeugmaschine, insbesondere eine Drehmaschine, zur Bearbeitung von Werkstücken, insbesondere zur Bearbeitung von Stangenmaterial, auf: ein Maschinengestell, eine erste am Maschinengestell angeordnete Werkstückspindel mit einer um eine erste Spindelachse drehbaren ersten Werkstückaufnahme, eine zweite am Maschinengestell angeordnete Werkstückspindel mit einer um eine zweite Spindelachse drehbaren zweiten Werkstückaufnahme, einen ersten mit mindestens einem Werkzeug bestückten Werkzeugträger zur Bearbeitung eines in der ersten Werkstückspindel gehaltenen Werkstücks auf einer Seite, und einen zweiten mit mindestens einem Werkzeug bestückten Werkzeugträger zur Bearbeitung eines in der zweiten Werkstückspindel gehaltenen Werkstücks auf einer anderen Seite, wobei die zweite Werkstückspindel auf einem Spindelträger angeordnet ist, welcher über ein erstes Schlittensystem gegenüber dem Maschinengestell parallel zur ersten Spindelachse in einer sogenannten X-Richtung und quer, insbesondere senkrecht, zur ersten Spindelachse in einer sogenannten Z₂-Richtung bewegbar ist, der zweite Werkzeugträger auf einem zweiten Schlittensystem sitzt, welches gegenüber dem Maschinengestell zumindest in der X-Richtung bewegbar ist, und der zweite Werkzeugträger auf dem zweiten Schlittensystem mittels einer Schwenkeinrichtung um eine Schwenkachse, welche senkrecht zu einer Bewegungsebene verläuft, die durch die X-Richtung und die Z₂-Richtung definiert ist, schwenkbar ist.

Ferner ist es vorteilhaft, wenn der zweite Werkzeugträger anhand des zweiten Schlittensystems gegenüber dem Maschinengestell zusätzlich in der Z₂-Richtung und/oder parallel zur Schwenkachse, die in einer sogenannten Y-Richtung verläuft, bewegbar ist.

Des Weiteren ist es bevorzugt, dass der zweite Werkzeugträger eine dritte Werkstückaufnahme aufweist, anhand der das in der ersten Werkstückspindel bearbeitete Werkstück aufgenommen und an die zweite Werkstückspindel zur Weiterberarbeitung übergeben werden kann.

Weiterhin ist es vorteilhaft, wenn die dritte Werkstückaufnahme durch ein Spannfutter, das in einer Revolverscheibe eines Revolvers des zweiten Werkzeugträgers integriert ist, realisiert ist.

Ferner ist es bevorzugt, dass der erste Werkzeugträger auf einem dritten Schlittensystem sitzt, welches gegenüber dem Maschinengestell parallel zur ersten Spindelachse in der X-Richtung und quer, insbesondere senkrecht, zur ersten Spindelachse in einer sogenannten Z₁-Richtung bewegbar ist.

Des Weiteren ist es vorteilhaft, dass die Bewegungsrichtung Z₁-Richtung des dritten Schlittensystems des ersten Werkzeugträgers einen Winkel von etwa 30° bis 60°, bevorzugt 45°, mit einer Grundfläche, auf der das Maschinengestell steht, bildet.

Gemäß einer weiteren Ausführungsform der vorliegenden Erfindung verwenden das dritte Schlittensystem und das erste Schlittensystem in der X-Richtung gemeinsame Führungsschienen.

Ferner ist es bevorzugt, dass an der ersten Werkstückspindel zum Laden des unbearbeiteten Werkstücks eine Stangenzuführeinrichtung, insbesondere ein Stangenlader, angeordnet ist.

Weiterhin ist es vorteilhaft, wenn die erste Werkstückspindel als ein Direktantrieb mit einer Hohlwelle ausgebildet ist, bei dem das unbearbeitete Werkstück durch die Hohlwelle des Direktantriebs zu der ersten Werkstückaufnahme zuführbar ist.

Ferner ist es bevorzugt, dass die erste Werkstückspindel und/oder die zweite Werkstückspindel als ein Direktantrieb, bevorzugt ein Synchronmotor, mit einem maximalen Drehmoment im Bereich von 200 bis 400 Nm und einer Drehzahl im Bereich von 0 bis 5000 U/min ausgebildet ist bzw. sind.

Gemäß einer weiteren Ausführungsform der vorliegenden Erfindung ist die erste Werkstückspindel als eine stationäre Werkstückspindel ausgebildet.

Des Weiteren ist es bevorzugt, dass der Führungsschlitten innerhalb des Maschinengestells, insbesondere unterhalb der Führungsschienen, vorgesehen ist.

Ferner ist es vorteilhaft, wenn die zweite Werkstückspindel oder der zweite Werkzeugträger in eine Koaxialstellung, in der die erste Werkstückaufnahme mit der zweiten Werkstückaufnahme oder die erste Werkstückaufnahme mit der dritten Werkstückaufnahme koaxial ist, schwenkbar ist.

Es ist ebenfalls bevorzugt, die Schwenkeinrichtung als einen Drehkranz auszubilden.

Weiterhin ist es vorteilhaft, wenn die Werkzeugmaschine eine Transporteinrichtung, insbesondere eine Werkstückabfuhreinrichtung, aufweist, anhand der durch die Werkzeugmaschine bearbeite Werkstücke abtransportiert und/oder einer weiteren Bearbeitungsvorrichtung zugeführt werden können. Es ist jedoch auch möglich, anhand der Transporteinrichtung der Werkezugmaschine Werkstücke, insbesondere bereits bearbeitete Werkstücke, zuzuführen.

Gemäß einer weiteren Ausführungsform nimmt die zweite Werkstückspindel in einer vertikalen Ausrichtung, in der sie senkrecht zur ersten Spindelachse und senkrecht zur Grundfläche ist, eine Entladestellung ein, in welcher die Möglichkeit besteht, das auf der Rückseite bearbeitete Werkstück bzw. das fertig bearbeitete Werkstück der Transporteinrichtung zu übergeben.

Des Weiteren ist es bevorzugt, wenn die Transporteinrichtung als ein Schlepprahmenband, ein Pallettenförderer mit Indexierung oder ein Shuttle ausgebildet ist.

Ferner ist es vorteilhaft, dass die Transporteinrichtung als ein Schlepprahmenband mit Hubtisch ausgebildet ist, wobei der Hubtisch dazu eingerichtet ist, in einer Ablage-/Aufnahmerichtung der zweiten Werkstückspindel, die senkrecht zur Grundfläche ist, beweglich gelagert zu sein.

Ferner betrifft die vorliegende Erfindung ein Schlepprahmenband, für die Zufuhr/Abfuhr von Werkstücken an/von einer Werkzeugmaschine, insbesondere einer Werkzeugmaschine nach einem der vorhergehenden Ansprüche, aufweisen: einen Kettentrieb mit umlaufender Kette für den Transport einer Vielzahl von Schlepprahmen, die auf einer Oberseite des Schlepprahmenbands endlos umlaufen, und einen Hubtisch, der dazu eingerichtet ist, in einer Ablage/Aufnahmerichtung der zu transportierenden Werkstücke, die senkrecht zu einer Grundfläche ist, auf der das Schlepprahmenband steht, beweglich gelagert zu sein.

Des Weiteren ist es vorteilhaft, wenn der Hubtisch einen beweglichen Körper und eine fest mit dem Schlepprahmenband verbundene Grundplatte aufweist, wobei der bewegliche Körper über zumindest zwei Andruckfedern, bevorzugt vier Andruckfedern, die an der Grundplatte befestigt sind, gegen einstellbare Anschlagschrauben, bevorzugt vier Senkschrauben, die als Anschlag für den beweglichen Körper dienen, gedrückt wird, wodurch der bewegliche Körper in einer oberen Position positionierbar und fixierbar ist.

Gemäß einer Ausführungsform der vorliegender Erfindung weist eine Bodenplatte des beweglichen Körpers vier Bohrungen, insbesondere Senkbohrungen, auf, durch welche die einstellbaren Anschlagschrauben hindurchstehen, wodurch der bewegliche Körper quer zu seiner Bewegungsrichtung, welche der Ablage/Aufnahmerichtung der Werkstücke entspricht, geführt ist.

Des Weiteren ist es bevorzugt, dass der Hubtisch so eingerichtet ist, dass eine Werkstückauflagefläche des Hubtischs, die eine Oberseite des beweglichen Körpers ist, in etwa eben zu der Oberseite des Schlepprahmenbands ausrichtbar ist, wobei die Ausrichtung anhand der einstellbaren Anschlagschrauben vornehmbar ist.

Weiterhin ist es vorteilhaft, wenn der Hubtisch eine Andrücküberwachung aufweist, mittels welcher ein Andrückweg, der in Richtung der Bewegungsrichtung des beweglichen Körpers verläuft, überwacht werden kann, bevorzugt erfolgt die Überwachung mittels zweier Hall-Sensoren.

### Kurze Beschreibung der Figuren

Fig. 1 zeigt eine schematische perspektivische Ansicht einer Drehmaschine gemäß dem Stand der Technik,
Fig. 2 zeigt eine schematische perspektivische Ansicht einer weiteren Drehmaschine gemäß dem Stand der Technik,
Fig. 3 zeigt eine schematische perspektivische Ansicht einer Drehmaschine gemäß einer ersten Ausführungsform der vorliegenden Erfindung,
Fig. 4 zeigt eine schematische perspektivische Ansicht einer Drehmaschine gemäß einer zweiten Ausführungsform der vorliegenden Erfindung,
Fig. 5 zeigt eine schematische perspektivische Ansicht der Drehmaschine gemäß der ersten Ausführungsform in dem Zustand, in dem die erste Werkstückspindel anhand eines Stangenladers mit einem Rohwerkstück beladen wird,
Fig. 6 zeigt eine schematische perspektivische Ansicht der Drehmaschine gemäß der ersten Ausführungsform in dem Zustand, in dem das durch die erste Werkstückspindel bearbeitete Werkstück an die zweite Werkstückspindel übergeben wird,
Fig. 7 zeigt eine schematische perspektivische Ansicht der Drehmaschine gemäß der ersten Ausführungsform in dem Zustand, in dem die zweite Werkstückspindel zurück in die vertikale Ausrichtung geschwenkt ist und das Werkstück durch ein Werkzeug der zweiten Werkzeugaufnahme bearbeitet wird,
Fig. 8 zeigt eine schematische perspektivische Ansicht der Drehmaschine gemäß der ersten Ausführungsform in dem Zustand, in dem das fertigbearbeitete Werkstück anhand der zweiten Werkstückspindel an eine nachgeschaltete Transporteinrichtung übergeben wird,
Fig. 9 zeigt einen perspektivische Detailansicht der nachgeschalteten Transporteinrichtung, die als ein Schlepprahmenband mit Hubtisch ausgebildet ist,
Fig. 10 zeigt eine perspektivische Detailansicht des Hubtischs des Schlepprahmenbands.

### Detaillierte Beschreibung bevorzugter Ausführungsformen

Nachfolgend werden anhand der beigefügten Figuren bevorzugte Ausführungsformen der vorliegenden Erfindung im Detail beschrieben. Weitere in diesem Zusammenhang genannte Modifikationen bestimmter Merkmale können jeweils einzeln miteinander kombiniert werden, um weitere Ausführungsformen auszubilden.

Dabei sind in den verschiedenen Figuren gleiche oder entsprechende Elemente jeweils mit den gleichen oder ähnlichen Bezugszeichen bezeichnet.

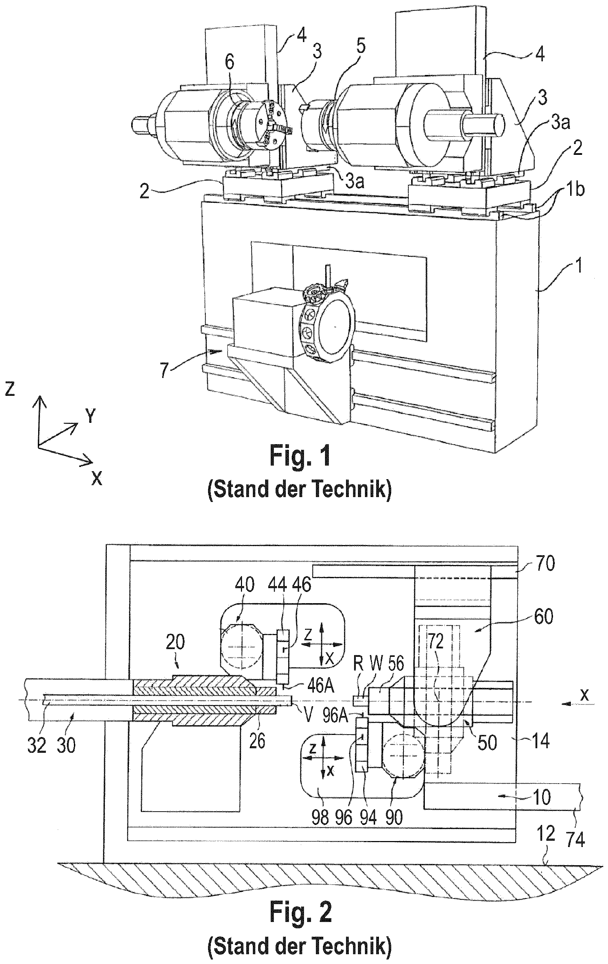

Fig. 1 zeigt eine schematische perspektivische Ansicht einer Drehmaschine gemäß dem Stand der Technik. Die in Fig. 1 dargestellte Drehmaschine weist ein Maschinenbett 1 und zwei Werkstückspindeln 5 und 6 auf. An der vertikalen Frontseite des Maschinenbetts 1 sind zwei zueinander parallele Leisten vorgesehen, auf denen eine Werkzeugaufnahme 7 ausgerichtet werden kann. Das Maschinenbett 1 ist als Rahmen ausgebildet, der an seiner Oberseite Bettführungen 1b trägt. Auf den Bettführungen 1b sind zwei Bettschlitten 2 mittels Führungsschuhen horizontal verschieblich vorgesehen. Die Bettschlitten 2 tragen Planschlitten 3, an denen wiederum Längsschlitten 4 geführt sind. An den Längsschlitten 4 sind Schwenkaufnahmen 5d und 6d verschwenkbar befestigt, die jeweils eine als integrierte Motorspindel ausgebildete Werkstückspindel 5 und 6 tragen.

Die Planschlitten 3 sind als Konsolen ausgeführt, an deren Unterseite Planführungen 3a vorgesehen sind. Die Planführungen 3a gleiten in Führungsschuhen auf der Oberseite des Bettschlittens 2. An den Frontseiten der Planschlitten 3 sind Längsführungen 3b vorgesehen, in denen der Längsschlitten 4 in vertikaler Richtung verfahrbar ist. Die Vorschubantriebe für die Schlitten 2, 3 und 4 sind nicht dargestellt. Auf diese Weise sind die Werkstückspindeln 5 und 6 jeweils in den drei Raumrichtungen X, Y und Z verfahrbar sowie um eine Schwenkachse, die parallel zur Y-Achse ist, schwenkbar.

Fig. 2 zeigt eine schematische perspektivische Ansicht einer weiteren Drehmaschine gemäß dem Stand der Technik. Die dargestellte Drehmaschine umfasst ein als Ganzes mit 10 bezeichnetes Maschinengestell, welches sich über einer Grundfläche 12 erhebt und ein Maschinenbett 14 aufweist, an welchem eine erste Werkstückspindel 20 gehalten ist, welche ein erste Werkstückaufnahme 26 aufweist. Der ersten Werkstückspindel 20 ist eine Stangenzuführeinrichtung 30 zugeordnet, mit welcher eine Werkstoffstange 32 durch eine Hohlwelle eines Spindelmotors 24 der Werkstückspindel 20 der ersten Werkstückaufnahme 26 zuführbar ist. Zur Bearbeitung der aufgenommenen Werkstoffstange 32 ist der ersten Werkstückspindel 20 ein erster Werkzeugträger 40 zugeordnet, welcher einen drehbaren Revolverkopf 44 umfasst, in welchem eine Vielzahl von ersten Werkzeugen 46 angeordnet ist.

Die Relativbewegung zwischen dem ersten Werkzeug 46A und dem Werkstück WR ist beispielsweise dadurch erreichbar, dass der erste Werkzeugträger 40 auf einem Schlittensystem sitzt, welches gegenüber dem Maschinenbett 14 parallel zur ersten Spindelachse 28 in einer Z-Richtung und senkrecht zur ersten Spindelachse in einer X-Richtung bewegbar ist.

Auf dem Maschinenbett 14 ist ferner eine zweite Werkstückspindel 50 angeordnet, welche ebenfalls eine zweite Werkstückaufnahme 56 aufweist. Die zweite Werkstückaufnahme 56 dient dabei dazu, das in der ersten Werkstückspindel 20 auf seiner Vorderseite V bearbeitete Werkstück W mit der Vorderseite V aufzunehmen und auf seiner Rückseite R zu bearbeiten.

Zum Übernehmen des auf der Vorderseite V bearbeiten Werkstücks W von der ersten Werkstückspindel 20 ist die zweite Werkstückspindel 50 koaxial zur ersten Werkstückspindel 20 ausrichtbar und in Richtung der ersten Werkstückspindel 20 bewegbar.

Hierzu ist die zweite Werkstückspindel 50 in einem als Ganzes mit 60 bezeichneten zweiten Spindelträger gehalten, welcher über Längsführungen 68, 70 parallel zur Z-Richtung verschiebbar ist. Die zweite Werkstückspindel 50 ist ferner in dem zweiten Spindelträger 60 um eine Schwenkachse 72 schwenkbar, welche senkrecht zu einer Bewegungsebene E verläuft, die durch die beiden Richtungen X und Z aufgespannt ist. Dadurch ist die zweite Werkstückspindel 50 von einer zur ersten Werkstückspindel 20 koaxialen Stellung in eine in Fig. 2 strichpunktiert dargestellte Stellung verschwenkbar, in welcher die zweite Werkstückaufnahme 56 der Grundfläche 12 zugewandt ist.

Die in Fig. 2 strichpunktiert dargestellte Stellung der zweiten Werkstückspindel 50 entspricht dabei einer Entladestellung, in welcher die Möglichkeit besteht, das auf der Rückseite R bearbeitete Werkstück W einer Werkstückabfuhreinrichtung 74 zu übergeben.

Zur Bearbeitung des Werkstücks W auf der Rückseite R in der zweiten Werkstückspindel 50 ist ein zweiter Werkzeugträger 90 vorgesehen, welcher einen Revolverkopf 94 aufweist, an welchem zweite Werkzeuge 96 angeordnet sind. Der zweite Werkzeugträger 90 ist ebenfalls auf einem zweiten Schlittensystem 98 angeordnet, welches in der Z-Richtung und in der X-Richtung bewegbar ist.

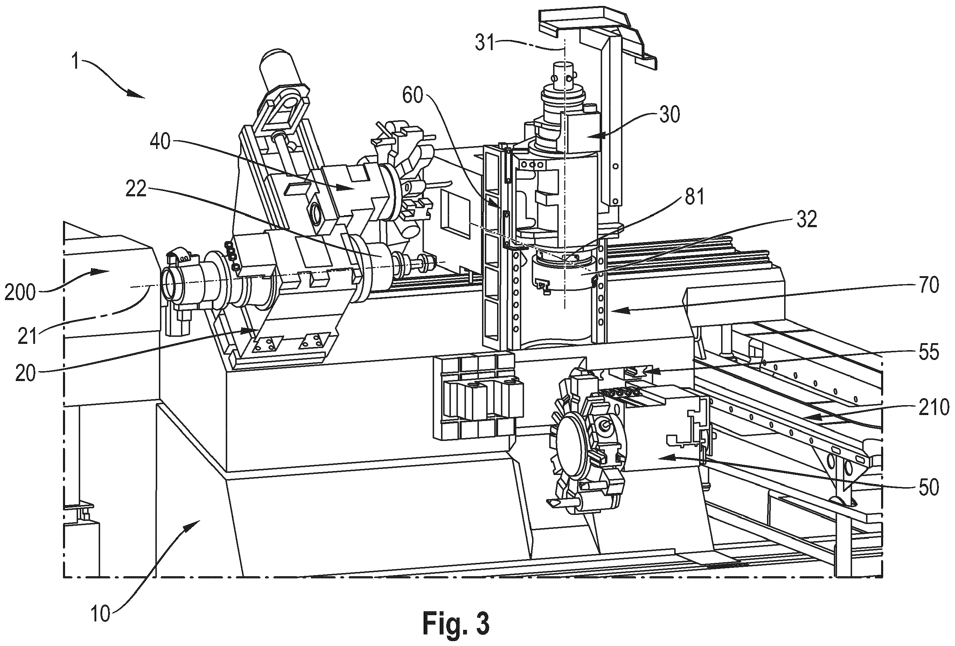

Fig. 3 zeigt eine schematische perspektivische Ansicht einer Drehmaschine 1 gemäß einer ersten Ausführungsform der vorliegenden Erfindung. Die dargestellte Drehmaschine 1 weist ein Maschinengestell 10, eine erste am Maschinengestell 10 in Blickrichtung der Fig. 3 links angeordnete Werkstückspindel 20 und eine in Blickrichtung der Fig. 3 rechts angeordnete zweite Werkstückspindel 30 auf. Beide Werkstückspindeln 20, 30 sind jeweils mit Werkstückaufnahmen 22, 32 versehen, welche um Spindelachsen 21, 31 der Werkstückspindeln 20, 30 drehbar sind. Zur Aufnahme des Werkstücks W sind die Werkstückaufnahmen 22, 32 bevorzugt als Spannfutter ausgebildet. Ferner weist die dargestellte Drehmaschine 1 einen ersten Werkzeugträger 40 auf, der als Revolver ausgebildet ist, um eine Vielzahl an Werkzeugen aufnehmen und für die Bearbeitung des in der ersten Werkstückspindel aufgenommenen Werkstücks W bereitzustellen.

Wie der Fig. 3 ferner entnommen werden kann, ist die Oberseite des Maschinengestells 10 an der Vorderseite abgeschrägt, wobei die Abschrägung bevorzugt einen Winkel von 45 Grad aufweist. Dies ermöglicht es, die erste Werkstückspindel 20, welche als eine stationäre Werkstückspindel 20 mit horizontal ausgerichteter Spindelachse 21 ausgebildet ist, in einem Winkel von 45 Grad an dem Maschinengestell 10 anzubringen, womit die bei der Drehbearbeitung anfallende Späne leicht abgeführt werden kann, da sie an der Abschrägung des Maschinengestells 10 nach unten rutschen und beispielsweise in einem nicht dargestellten Auffangbehälter gesammelt werden kann.

Ferner weist die erste Werkstückspindel 20 einen Direktantrieb auf, welcher als Hohlwellenantrieb ausgebildet ist. Auf diese Weise ist es möglich, die erste Werkstückaufnahme 22 mittels eines Stangenladers 200 von der Seite, in der Fig. 3 von rechts, mit Rohstangenmaterial durch die Hohlwelle des Direktantriebs zu versorgen.

Des Weiteren sitzt der erste Werkzeugträger 40 auf einem dritten Schlittensystem 110, welches ebenfalls in einem Winkel von 45 Grad nach oben, also parallel zu der Abschrägung des Maschinengestells 10, angeordnet ist. Hierdurch kann die Breite bzw. Tiefe der Werkzeugmaschine 1 reduziert werden, da das Schlittensystem 110 den freien Raum in vertikaler Richtung ausnützt. Das dritte Schlittensystem 110 besteht aus zwei Führungsschlitten, wobei der erste Führungsschlitten eine Bewegung parallel zur ersten Spindelachse 21 in einer sogenannten X-Richtung ermöglicht und der zweite Führungsschlitten eine Bewegung senkrecht zur ersten Spindelachse in einer sogenannten Z₁-Richtung ermöglicht. Die Z₁-Richtung bildet in der dargestellten Ausführungsform wie oben bereits geschildert einen 45 Grad Winkel mit einer Grundfläche G auf welcher das Maschinengestell 10 aufgestellt ist. Die zwei Führungsschienen 71 des ersten Führungsschlitten sind an der Oberseite des Maschinengestells montiert.

Ferner weist die dargestellte Drehmaschine 1 einen zweiten Werkzeugträger 50 auf, welcher ebenfalls als Revolver ausgebildet ist und eine Vielzahl an Werkzeugen aufnimmt, welche zur Bearbeitung eines in der zweiten Werkstückspindel 30 gehaltenen Werkstücks W bereitgehalten werden. Wie der Fig. 3 entnommen werden kann, ist der zweite Werkzeugträger 50 rechts am Maschinengestell 10 und unterhalb des Spindelträgers 60 angeordnet.

Die zweite Werkstückspindel 30 ist auf einem Spindelträger 60 angeordnet, welcher über ein erstes Schlittensystem 70 gegenüber dem Maschinengestellt 10 parallel zur ersten Spindelachse 21 in der X-Richtung verschiebbar ist. Ferner ermöglicht das erste Schlittensystem 70 eine Bewegung der zweiten Werkstückspindel 30 senkrecht zur ersten Spindelachse 21 in einer sogenannten Z₂-Richtung, welche in der dargestellten Stellung in vertikaler Richtung verläuft, d.h. senkrecht zur Grundfläche G.

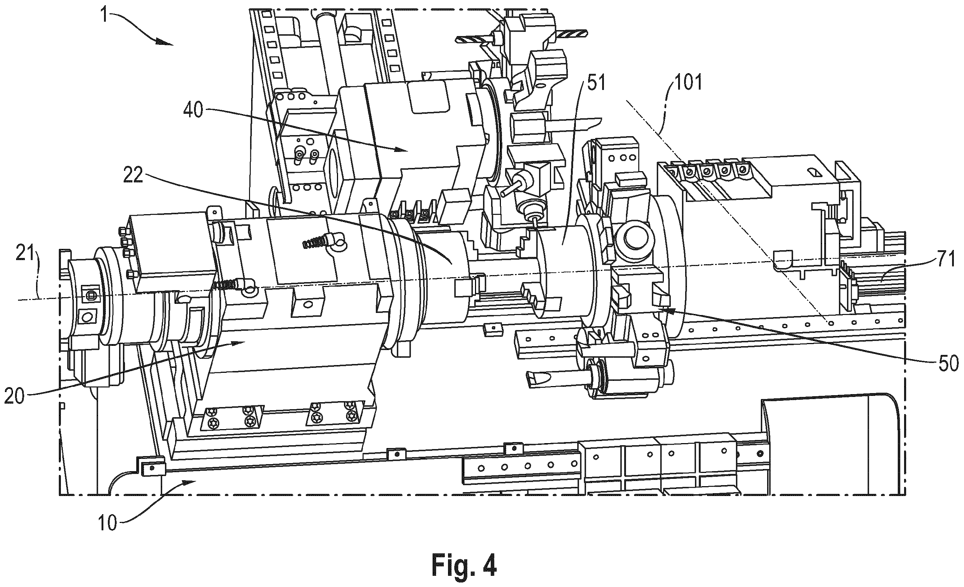

Das erste Schlittensystem 70 besteht wiederum aus zwei Führungsschlitten, wobei der erste Führungsschlitten die gleichen Führungsschienen 71 nutzt, wie der erste Führungsschlitten des dritten Schlittensystems 110. Der erste Führungsschlitten trägt eine Konsole 61 des Spindelträgers 60 an dem eine zweite Konsole 62 mittels einer Schwenkeinrichtung 80, insbesondere einem nicht dargestellten Drehkranz, um eine Schwenkachse 81, welche senkrecht zu einer Bewegungsebene E verläuft, die durch die X-Richtung und die Z₂-Richtung aufgespannt ist, schwenkbar ist. Auf der zweiten Konsole 62 ist ein zweiter Schlitten angeordnet, auf dem die zweite Werkstückspindel 30 sitzt und somit in zwei Richtungen bewegbar und um eine Achse, nämlich die Schwenkachse 81, schwenkbar ist. Abhängig von der Schwenkstellung der zweiten Konsole 62 kann beispielsweise die zweite Werkstückspindel 30 senkrecht zur ersten Spindelachse 21 (wie in Fig. 3 dargestellt) oder parallel zur ersten Spindelachse 21 (wie in Fig. 4 dargestellt) ausgerichtet und bewegt werden.

Wie der Fig. 3 ebenfalls entnommen werden kann, weist der zweite Werkzeugträger 50 einen Führungsschlitten 55 auf, der gegenüber dem Maschinengestell 10 parallel zur Schenkachse 81, die in einer sogenannten Y-Richtung verläuft, d.h. in Tiefenrichtung der Fig. 3, bewegbar ist.

Der Fig. 3 kann des Weiteren entnommen werden, dass es vorteilhaft ist die Drehmaschine 1 mit einer Transporteinrichtung, insbesondere einer Werkstückabfuhreinrichtung, zu versehen, welche es ermöglicht, automatisch die durch die Drehmaschine 1 bearbeiteten Werkstücke W abzutransportieren.

Der Fig. 3 kann ferner entnommen werden, dass die Abschrägung des Maschinengestells 10 an der Vorderseite einen weiteren Vorteil hat, nämlich, dass dadurch die zweite Konsole 62 näher an den zweiten Werkzeugträger 50 herangeführt werden kann, wodurch die Steifigkeit des Spindelträgers 60 erhöht und somit die Bearbeitungsgenauigkeit der zweiten Werkstückspindel 30 verbessert wird.

In der dargestellten Ausführungsform ist ferner der Führungsschlitten 55 des zweiten Werkzeugträgers in dem Maschinengestell angeordnet, insbesondere unterhalb des Spindelträgers 60 bzw. der Führungsschienen 71, wodurch es ebenfalls ermöglicht wird, die Drehmaschine 1 kompakter zu gestallten.

Fig. 4 zeigt eine schematische perspektivische Ansicht einer Drehmaschine 1 gemäß einer zweiten bzw. alternativen Ausführungsform der vorliegenden Erfindung. Die zweite Ausführungsform weist im Wesentlichen den gleichen Aufbau wie die oben in Bezug auf Fig. 1 beschriebene erste Ausführungsform der vorliegenden Erfindung auf. Der Hauptunterschied liegt lediglich darin, dass die zweite Werkstückspindel 30 nicht schwenkbar ausgebildet ist. Damit der notwendige Bauraum der Drehmaschine 1 möglichst gering gehalten werden kann, ist die zweite Werkstückspindel vertikal ausgerichtet.

Um dennoch in der Lage zu sein, eine automatische Werkstückübergabe von der ersten Werkstückspindel 20 zu der zweiten Werkstückspindel 30 zu realisieren, weist die Drehmaschine gemäß der zweiten Ausführungsform einen zweiten Werkzeugträger auf, der auf einem zweiten Schlittensystem 90 sitzt, welches gegenüber dem Maschinengestell 10 zumindest in der X-Richtung, d.h. parallel zu der ersten Spindelachse 21, bewegbar ist. Ferner ist der zweite Werkzeugträger 50 auf dem zweiten Schlittensystem 90 mittels einer Schwenkeinrichtung 100 um eine Schwenkachse 101, welche senkrecht zu einer Bewegungsebene E verläuft, die durch die X-Richtung und die Z₂-Richtung definiert ist, schwenkbar.

Wie der Fig. 4 ebenfalls entnommen werden kann, ist der zweite Werkzeugträger 50 anhand des zweiten Schlittensystems 90 ebenfalls in der Z₂-Richtung bewegbar, was es ermöglicht, den zweiten Werkzeugträger 50 in Richtung der zweiten Werkstückspindel 30 zu bewegen, um ein eingespanntes Werkstück zu bearbeiten.

Zur Übergabe des Werkstücks von der ersten Werkstückspindel 20 zu der zweiten Werkstückspindel 30 weist der zweite Werkzeugträger 50 eine dritte Werkstückaufnahme 51 auf, welche in der vorliegenden Ausführungsform als ein Spanfutter, das in einer Revolverscheibe eines Revolvers des zweiten Werkzeugträgers 50 integriert ist, realisiert ist.

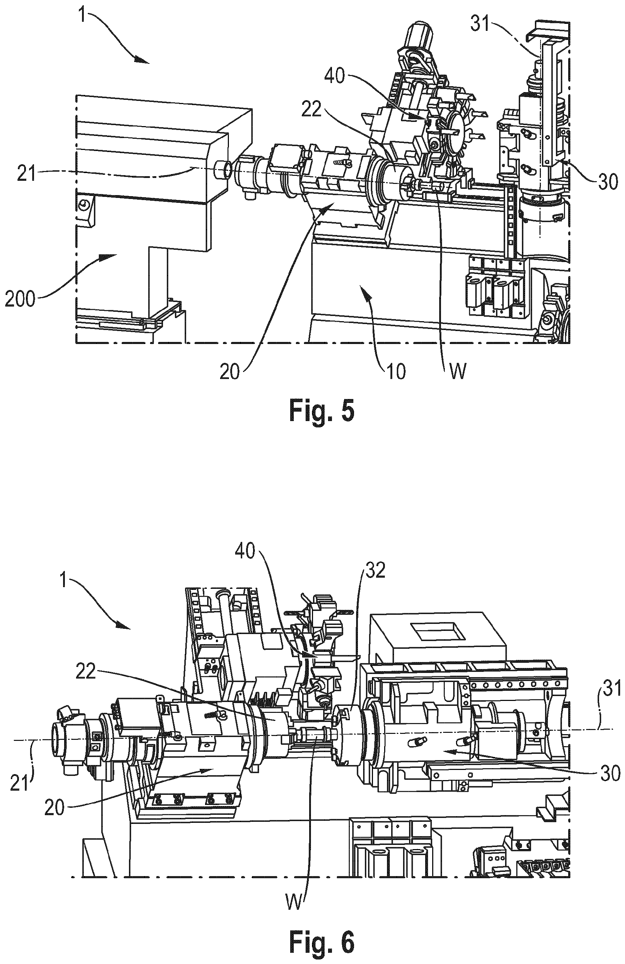

Fig. 5 zeigt die Drehmaschine 1 gemäß der ersten Ausführungsform in dem Zustand, in dem die erste Werkstückspindel 20 anhand eines Stangenladers 200 mit einem Rohwerkstück beladen wird.

Fig. 6 zeigt ebenfalls die Drehmaschine 1 gemäß der ersten Ausführungsform, jedoch in dem Zustand, in dem das durch die erste Werkstückspindel 20 bearbeitete Werkstück W an die zweite Werkstückspindel 30 übergeben wird. Wie für Drehmaschinen typisch, kann das in der ersten Werkstückspindel 20 eingespannte Werkstück W nur an der frei liegenden Seite V bearbeitet werden. Daher ist es notwendig, das Werkstück W aus der Werkstückspindel 20 zu entnehmen und mit der anderen Seite R freiliegend in die Werkstückspindel 20 wieder einzusetzen, oder wie dargestellt, an die zweite Werkstückaufnahme 32 der zweiten Werkstückspindel 30, welche hierzu in eine horizontale Stellung, in welcher die beiden Spindelachsen 21, 31 der beiden Werkstückspindeln 20, 30 koaxial zueinander ausgerichtet sind, geschwenkt wird, zu übergeben. Hierbei erfolgt die Übergabe des Werkstücks W von der ersten Werkstückaufnahme 22 an die zweite Werkstückaufnahme 32 derart, dass die bisher nicht bearbeitete Rückseite R des Werkstücks W, welche in der ersten Werkstückaufnahme 22 zur Einspannung des Werkstücks W benutzt wurde, nun frei liegt.

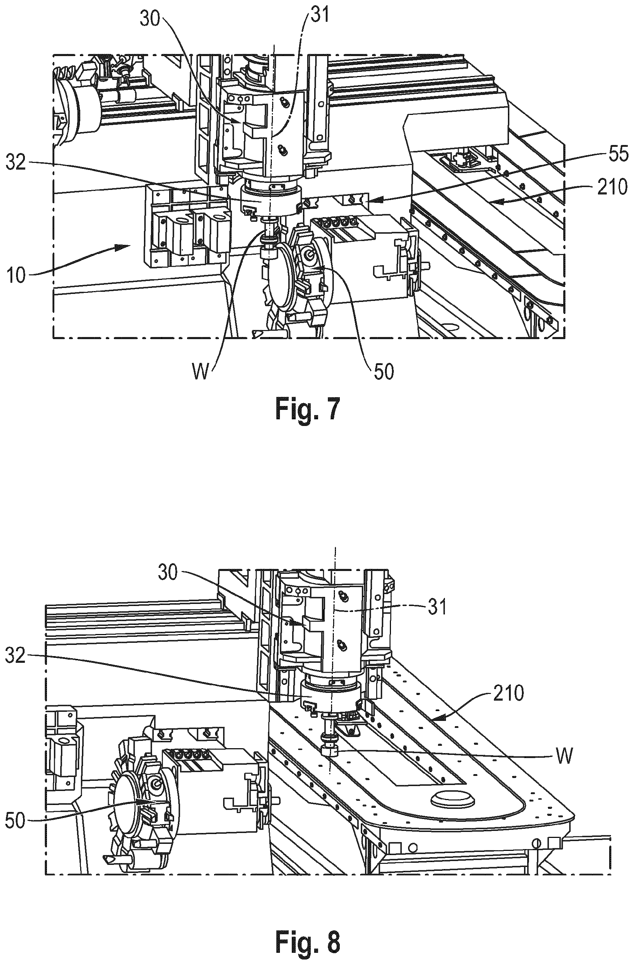

Fig. 7 zeigt die Drehmaschine 1 gemäß der ersten Ausführungsform in dem Zustand, in dem die zweite Werkstückspindel 30 zurück in die vertikale Ausrichtung geschwenkt ist und das Werkstück W durch ein Werkzeug der zweiten Werkzeugaufnahme 50 bearbeitet wird. Zu diesem Zweck wird wie dargestellt die zweite Werkstückspindel 30, welche auf dem Spindelträger 60 sitzt, in eine unterste Stellung auf dem zweiten Schlitten des ersten Schlittensystems 70 gebracht, um das aufgenommene Werkstück W in einen Bearbeitungsraum der zweiten Werkzeugaufnahme 50 zu bringen.

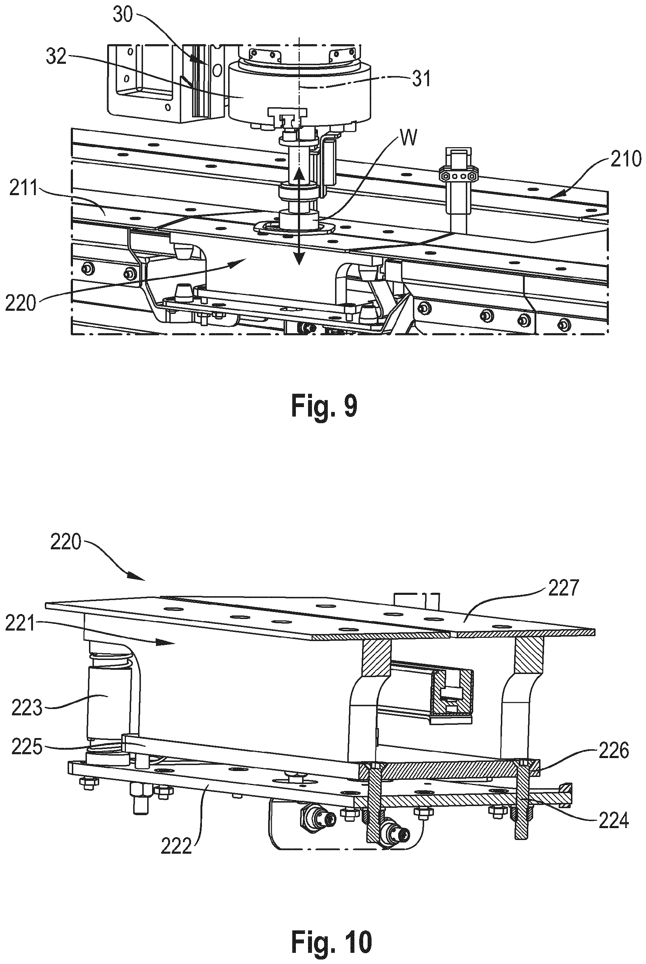

Nach der erfolgten Bearbeitung der Rückseite R des Werkstücks W in der zweiten Werkstückspindel 30 wird das Werkstück W wie in Fig. 8 gezeigt ist, anhand der zweiten Werkstückspindel 30, welche sich in einer vertikal ausgerichteten Stellung befindet, an eine nachgeschaltete Transporteinrichtung 210 übergeben. Hierzu wird die zweite Werkstückspindel 30 mittels des Spindelträgers 60, insbesondere dem zweiten Schlitten des ersten Schlittensystems 70 in eine obere Stellung gebracht, in welcher das Werkstück W über die Transporteinrichtung 210 gebracht werden kann und gegebenenfalls auf einem nicht dargestellten Werkstückträger, welcher auf der Transporteinrichtung 210 zum Transport des Werkstücks W vorgesehen ist, abgelegt werden.
Um die Übergabe von der zweiten Werkstückspindel 30 auf die Transporteinrichtung 210, insbesondere auf den Werkstückträger, zu vereinfachen, weist die Transporteinrichtung 210, welche gemäß der ersten Ausführungsform vorliegender Erfindung als ein Schlepprahmenband ausgebildet ist, einen Hubtisch 220 auf, der in Ablagerichtung der zweiten Werkstückspindel 30, welche in Fig. 9 vertikal ist, beweglich gelagert ist. Dies ermöglicht es, Toleranzen zwischen dem Werkstückträger und der Abgabeposition der zweiten Werkstückspindel 30 in vertikaler Richtung auszugleichen.

Fig. 10 zeigt eine perspektivische Detailansicht des Hubtischs 220 des Schlepprahmenbands 210. Das Schlepprahmenband 210 weist einen nicht dargestellten Kettentrieb mit umlaufender Kette auf, anhand welchem eine Vielzahl von Schlepprahmen (nicht dargestellt) auf einer Oberseite 211 des Schlepprahmenbands 210 endlos, d.h. im geschlossenen Umlauf, transportiert werden.

Der Hubtisch 220 weist einen beweglichen Körper 221 und eine fest mit dem Schlepprahmenband 210 verbundene Grundplatte 222 auf, wobei der bewegliche Körper 221 über vier Andruckfedern 223, die an der Grundplatte 222 befestigt sind, gegen einstellbare Anschlagschrauben 224, die als vier Senkschrauben ausgebildet sind, gedrückt wird, wodurch der bewegliche Körper 221 in einer oberen Position positioniert und fixiert ist.

Eine Werkstückauflagefläche 227 des Hubtischs 220, die eine Oberseite des beweglichen Körpers 221 ist, ist in der oberen Position des Hubtischs 220 in etwa eben zu der Oberseite 211 des Schlepprahmenbands 210 ausgerichtet, wobei die Ausrichtung anhand der einstellbaren Anschlagschrauben 224 vorgenommen wird.

Wird nun mittels der zweiten Werkstückspindel 30 das fertig bearbeitete Werkstück W auf der Werkstückauflagefläche 227 des Hubtisches 220 abgelegt und hierbei die Unterseite des Werkstücks W, welche der Vorderseite V des Werkstücks entspricht, absichtlich oder unabsichtlich gegen die Werkstückauflagefläche 227 gedrückt (sogenanntes Überfahren der Ablageposition), kann die Werkstückauflagefläche 227 aufgrund der federnden Lagerung des beweglichen Körpers 221 nach unten ausweichen. Hierbei drückt die zweite Werkstückspindel 30 den beweglichen Körper 221 nach unten, wodurch sich die vier Senkköpfe der Senkschrauben 224 aus vier Senkbohrungen 226, welche auf der Oberseite einer Bodenplatte 225 des beweglichen Körpers 221 vorgesehen sind, lösen und die Bodenplatte 225 entlang der vier Senkschrauben 224 geführt, insbesondere in Querrichtung, nach unten gleitet.

Öffnet die zweite Werkstückspindel 30 ihre zweite Werkstückaufnahme 32, wird der bewegliche Körper 221 des Hubtischs 220 durch die vier Andruckfedern 223 wieder zurück in die obere Position gedrückt, wodurch die Bodenplatte 225 sich entlang der Senkschrauben 224 wieder nach oben bewegt und die Senkköpfe der Senkschrauben 224 zurück in die Senkungen der Senkbohrungen 226 finden, wodurch die Bodenplatte 225 und somit der bewegliche Körper 221 zentriert wird.

Wie der Fig. 10 ferner entnommen werden kann, weist der dargestellte Hubtisch 220 eine Andrücküberwachung auf, mittels welcher ein Andrückweg, der in Richtung der Bewegungsrichtung B des beweglichen Körpers 221 verläuft, überwacht werden kann, wobei die Überwachung mittels zweier Hall-Sensoren erfolgt.

Aus der vorhergehenden Beschreibung erkennt der Fachmann, dass verschiedene Modifikationen und Variationen der Vorrichtung der Erfindung durchgeführt werden können, ohne den Umfang der Erfindung zu verlassen.
Ferner wurde die Erfindung in Bezug auf bestimmte Ausführungsformen beschrieben, die jedoch nur zum besseren Verständnis der Erfindung dienen sollen, und diese nicht einschränken sollen. Der Fachmann erkennt auch sofort, dass viele verschiedene Kombinationen der Elemente zur Ausführung der vorliegenden Erfindung verwendet werden können.

Auch wenn in den zuvor beschriebenen Ausführungsformen eine bestimmte Anzahl von Komponenten genannt sind, kann gemäß weiterer Ausführungsformen eine andere Anzahl dieser Komponenten zur Anwendung kommen.

## Patentansprüche

1. Werkzeugmaschine (1), insbesondere Drehmaschine, zur Bearbeitung von Werkstücken, insbesondere von Stangenmaterial, umfassend:
ein Maschinengestell (10),
eine erste am Maschinengestell (10) angeordnete Werkstückspindel (20) mit einer um eine erste Spindelachse (21) drehbaren ersten Werkstückaufnahme (22),
eine zweite am Maschinengestell (10) angeordnete Werkstückspindel (30) mit einer um eine zweite Spindelachse (31) drehbaren zweiten Werkstückaufnahme (32),
einen ersten mit mindestens einem Werkzeug bestückten Werkzeugträger (40) zur Bearbeitung eines in der ersten Werkstückspindel (20) gehaltenen Werkstücks (W) auf einer Seite (V), und
einen zweiten mit mindestens einem Werkzeug bestückten Werkzeugträger (50) zur Bearbeitung eines in der zweiten Werkstückspindel (30) gehaltenen Werkstücks (W) auf einer anderen Seite (R), wobei
die zweite Werkstückspindel (30) auf einem Spindelträger (60) angeordnet ist, welcher über ein erstes Schlittensystem (70) gegenüber dem Maschinengestell (10) parallel zur ersten Spindelachse (21) in einer sogenannten X-Richtung und quer, insbesondere senkrecht, zur ersten Spindelachse (21) in einer sogenannten Z₂-Richtung bewegbar ist,
die zweite Werkstückspindel (30) auf dem Spindelträger (60) mittels einer Schwenkeinrichtung (80) um eine Schwenkachse (81), welche senkrecht zu einer Bewegungsebene E verläuft, die durch die X-Richtung und die Z₂-Richtung definiert ist, schwenkbar ist, und
der zweite Werkzeugträger (50) auf einem Führungsschlitten (55) sitzt, der gegenüber dem Maschinengestell (10) parallel zu der Schwenkachse (81), die in einer sogenannten Y-Richtung verläuft, bewegbar ist.

2. Werkzeugmaschine (1), insbesondere Drehmaschine, zur Bearbeitung von Werkstücken, insbesondere von Stangenmaterial, umfassend:
ein Maschinengestell (10),
eine erste am Maschinengestell (10) angeordnete Werkstückspindel (20) mit einer um eine erste Spindelachse (21) drehbaren ersten Werkstückaufnahme (22),
eine zweite am Maschinengestell (10) angeordnete Werkstückspindel (30) mit einer um eine zweite Spindelachse (31) drehbaren zweiten Werkstückaufnahme (32),
einen ersten mit mindestens einem Werkzeug bestückten Werkzeugträger (40) zur Bearbeitung eines in der ersten Werkstückspindel (20) gehaltenen Werkstücks (W) auf einer Seite (V), und
einen zweiten mit mindestens einem Werkzeug bestückten Werkzeugträger (50) zur Bearbeitung eines in der zweiten Werkstückspindel (30) gehaltenen Werkstücks (W) auf einer anderen Seite (R), wobei
die zweite Werkstückspindel (30) auf einem Spindelträger (60) angeordnet ist, welcher über ein erstes Schlittensystem (70) gegenüber dem Maschinengestell (10) parallel zur ersten Spindelachse (21) in einer sogenannten X-Richtung und quer, insbesondere senkrecht, zur ersten Spindelachse (21) in einer sogenannten Z₂-Richtung bewegbar ist,
der zweite Werkzeugträger (50) auf einem zweiten Schlittensystem (90) sitzt, welches gegenüber dem Maschinengestell (10) zumindest in der X-Richtung bewegbar ist, und
der zweite Werkzeugträger (50) auf dem zweiten Schlittensystem (90) mittels einer Schwenkeinrichtung (100) um eine Schwenkachse (101), welche senkrecht zu einer Bewegungsebene E verläuft, die durch die X-Richtung und die Z₂-Richtung definiert ist, schwenkbar ist.

3. Werkzeugmaschine (1) nach Anspruch 2, bei welcher der zweite Werkzeugträger (50) anhand des zweiten Schlittensystems (90) ferner gegenüber dem Maschinengestell (10) in der Z₂-Richtung und/oder parallel zur Schwenkachse (101), die in einer sogenannten Y-Richtung verläuft, bewegbar ist.

4. Werkzeugmaschine (1) nach Anspruch 2 oder 3, bei welcher der zweite Werkzeugträger (50) eine dritte Werkstückaufnahme (51) aufweist.

5. Werkzeugmaschine (1) nach Anspruch 4, bei welcher die dritte Werkstückaufnahme (51) durch ein Spannfutter, das in einer Revolverscheibe eines Revolvers des zweiten Werkzeugträgers (50) integriert ist, realisiert ist.

6. Werkzeugmaschine (1) nach einem der vorhergehenden Ansprüche, bei welcher der erste Werkzeugträger (40) auf einem dritten Schlittensystem (110) sitzt, welches gegenüber dem Maschinengestell (10) parallel zur ersten Spindelachse (21) in der X-Richtung und quer, insbesondere senkrecht, zur ersten Spindelachse (21) in einer sogenannten Z₁-Richtung bewegbar ist.

7. Werkzeugmaschine (1) nach Anspruch 6, bei welcher die Bewegungsrichtung Z₁-Richtung des dritten Schlittensystems (110) des ersten Werkzeugträgers einen Winkel von etwa 30° bis 60°, bevorzugt 45°, mit einer Grundfläche (G) auf der das Maschinengestell (10) steht, bildet.

8. Werkzeugmaschine (1) nach Anspruch 6 oder 7, bei welcher das dritte Schlittensystem (110) und das erste Schlittensystem (70) in der X-Richtung gemeinsame Führungsschienen (71) verwenden.

9. Werkzeugmaschine (1) nach einem der vorhergehenden Ansprüche, bei welcher an der ersten Werkstückspindel (20) zum Laden des unbearbeiteten Werkstücks (W) eine Stangenzuführeinrichtung (200), insbesondere ein Stangenlader, angeordnet ist.

10. Werkzeugmaschine (1) nach einem der vorhergehenden Ansprüche, bei welcher die erste Werkstückspindel (20) als ein Direktantrieb mit einer Hohlwelle ausgebildet ist, bei dem das unbearbeitete Werkstück (W) durch die Hohlwelle des Direktantriebs zu der ersten Werkstückaufnahme (22) zuführbar ist.

11. Werkzeugmaschine (1) nach einem der vorhergehenden Ansprüche, bei welcher die erste Werkstückspindel (20) und/oder die zweite Werkstückspindel als ein Direktantrieb, bevorzugt ein Synchronmotor, mit einem maximalen Drehmoment im Bereich von 200 bis 400 Nm und einer Drehzahl im Bereich von 0 bis 5000 U/min ausgebildet ist.

12. Werkzeugmaschine (1) nach einem der vorhergehenden Ansprüche, bei welcher die erste Werkstückspindel (20) als eine stationäre Werkstückspindel (20) ausgebildet ist.

13. Werkzeugmaschine (1) nach einem der vorhergehenden Ansprüche, bei welcher der Führungsschlitten (55) innerhalb des Maschinengestells (10), insbesondere unterhalb der Führungsschienen (71), vorgesehen ist.

14. Werkzeugmaschine (1) nach einem der vorhergehenden Ansprüche, bei der die zweite Werkstückspindel (20) oder der zweite Werkzeugträger (50) in eine Koaxialstellung, in der die erste Werkstückaufnahme (22) mit der zweiten Werkstückaufnahme (32) oder die erste Werkstückaufnahme (22) mit der dritten Werkstückaufnahme (51) koaxial ist, schwenkbar ist.

15. Werkzeugmaschine (1) nach einem der vorhergehenden Ansprüche, bei welcher die Schwenkeinrichtung (80, 100) als ein Drehkranz ausgebildet ist.

16. Werkzeugmaschine (1) nach einem der vorhergehenden Ansprüche, ferner umfassend eine Transporteinrichtung (210), insbesondere eine Werkstückabfuhreinrichtung, anhand der durch die Werkzeugmaschine bearbeite Werkstücke (W) abtransportiert und/oder einer weiteren Bearbeitungsvorrichtung zugeführt werden können.

17. Werkzeugmaschine (1) nach Anspruch 16, bei der die zweite Werkstückspindel (30) in einer vertikalen Ausrichtung, in der sie senkrecht zur ersten Spindelachse (21) ist, eine Entladestellung einnimmt, in welcher die Möglichkeit besteht, das auf der Rückseite (R) bearbeitete Werkstück (W) der Transporteinrichtung (210) zu übergeben.

18. Werkzeugmaschine (1) nach Anspruch 16 oder 17, bei der die Transporteinrichtung (210) als ein Schlepprahmenband, ein Pallettenförderer mit Indexierung oder ein Shuttle ausgebildet ist.

19. Werkzeugmaschine (1) nach einem der Ansprüche 16 bis 18, bei der die Transporteinrichtung (210) als ein Schlepprahmenband mit Hubtisch (220) ausgebildet ist, wobei der Hubtisch (220) dazu eingerichtet ist, in einer Ablage-/Aufnahmerichtung der zweiten Werkstückspindel (30), die senkrecht zur Grundfläche (G) ist, beweglich gelagert zu sein.

20. Schlepprahmenband (210), für die Zufuhr/Abfuhr von Werkstücken an/von einer Werkzeugmaschine, insbesondere einer Werkzeugmaschine nach einem der vorhergehenden Ansprüche, umfassend:
einen Kettentrieb mit umlaufender Kette für den Transport einer Vielzahl von Schlepprahmen, die auf einer Oberseite (211) des Schlepprahmenbands (210) endlos umlaufen, und
einen Hubtisch (220), der dazu eingerichtet ist, in einer Ablage/Aufnahmerichtung der zu transportierenden Werkstücke, die senkrecht zu einer Grundfläche (G) ist, auf der das Schlepprahmenband (210) steht, beweglich gelagert zu sein.

21. Schlepprahmenband (210) nach Anspruch 20, bei dem der Hubtisch (220) umfasst:
einen beweglichen Körper (221) und
eine fest mit dem Schlepprahmenband (210) verbundene Grundplatte (222),
wobei der bewegliche Körper (221) über zumindest zwei Andruckfedern (223), bevorzugt vier Andruckfedern, die an der Grundplatte befestigt sind, gegen einstellbare Anschlagschrauben (224), bevorzugt vier Senkschrauben, die als Anschlag für den beweglichen Körper (221) dienen, gedrückt wird, wodurch der bewegliche Körper (221) in einer oberen Position positionierbar und fixierbar ist.

22. Schlepprahmenband (210) nach Anspruch 21, bei dem eine Bodenplatte (225) des beweglichen Körpers (221) vier Bohrungen (226), insbesondere Senkbohrungen aufweist, durch welche die einstellbaren Anschlagschrauben (224) hindurchstehen, wodurch der bewegliche Körper (221) quer zu seiner Bewegungsrichtung (B), welche der Ablage/Aufnahmerichtung der Werkstücke entspricht, geführt ist.

23. Schlepprahmenband (210) nach Anspruch 20, bei dem der Hubtisch (220) so eingerichtet ist, dass eine Werkstückauflagefläche (227) des Hubtischs (220), die eine Oberseite des beweglichen Körpers (221) ist, in etwa eben zu der Oberseite (211) des Schlepprahmenbands (210) ausrichtbar ist, wobei die Ausrichtung anhand der einstellbaren Anschlagschrauben (224) vornehmbar ist.

24. Schlepprahmenband (210) nach einem der Ansprüche 20 bis 23, bei dem der Hubtisch (220) eine Andrücküberwachung aufweist, mittels welcher ein Andrückweg, der in Richtung der Bewegungsrichtung (B) des beweglichen Körpers (221) verläuft, überwacht werden kann, bevorzugt erfolgt die Überwachung mittels zweier Hall-Sensoren.
